# EUROPEAN PATENT APPLICATION

(11) **EP 4 440 199 A1**
(43) Date of publication of application: **02.10.2024**
(21) Application number: 21965162.7
(22) Date of filing: 25.11.2021
(51) Int. Cl.: H04W 40/22, H04L 5/00

(54) **REPEATER, AND NETWORK DEVICE AND COMMUNICATION METHOD THEREFOR**

(71) Applicant: FUJITSU LIMITED, Kawasaki-shi, Kanagawa 211-8588 (JP)
(72) Inventor: ZHANG, Lei, Beijing 100022 (CN); JIANG, Qinyan, Beijing 100022 (CN); CHEN, Zhe, Beijing 100022 (CN); WANG, Xin, Beijing 100022 (CN)
(74) Representative: Haseltine Lake Kempner LLP
(86) International application number: PCT/CN2021/133296
(87) International publication number: WO 2023/092427

(57) **Abstract**

Embodiments of the present disclosure provide a repeater, a network device and a communication method thereof. The communication method comprises: transmitting, by a network device, first indication information to a repeater, wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

## Description

### TECHNICAL FIELD

The present disclosure relates to the communication field.

### BACKGROUND

Compared with traditional 3G (third generation mobile communication technology) and 4G (fourth generation mobile communication technology) systems, a 5G (fifth generation mobile communication technology) system may provide a greater bandwidth and a higher data rate, and may support more types of terminals and vertical services. To this end, deployment frequencies for the 5G system are typically obviously higher than those for 3G and 4G systems. For example, the 5G system may be deployed at a millimeter wave band.

However, the higher a carrying frequency, the more severe the fading that a signal experiences during transmission. Therefore, in actual deployment of the 5G system, especially at a millimeter wave band, how to better enhance cell coverage becomes an urgent problem to be solved.

It should be noted that the above introduction to the technical background is just to facilitate a clear and complete description of the technical solutions of the present disclosure, and is elaborated to facilitate the understanding of persons skilled in the art. It may not be considered that the above technical solutions are known by persons skilled in the art just because these solutions are elaborated in the Background of the present disclosure.

### SUMMARY

In order to better solve the coverage problem of a cellular mobile communication system in actual deployment, an RF relay/repeater is adopted to amplify and forward a communication signal between a terminal equipment and a network device, and is a more commonly used deployment means. An RF repeater is widely applied in the actual deployment of 3G and 4G systems. Generally speaking, an RF repeater is a device that amplifies and forwards incoming and outgoing signals between a network device and a terminal equipment in an RF domain.

The inventor finds that for the coverage problem encountered in the deployment of the 5G system, adopting an RF repeater to perform coverage enhancement is one of the feasible solutions. However, traditional repeaters do not have a capacity to communicate with a network device, and may not directly obtain uplink and downlink configuration related information from the network device. Thus, such repeaters configured in a 5G system may help increase a signal strength, but they are not flexible enough to cope with complex environmental changes, and thus may not achieve the same effect as deploying the same RF repeater in 3G and 4G systems.

For at least one of the above problems, embodiments of the present disclosure provide a repeater, a network device and a communication method thereof. The repeater has a capacity to communicate with a network device. The repeater communicates with the network device or forwards a signal between the network device and a third device by receiving indication information of a network. By using the method in the present disclosure, the forwarding of the repeater may be adjusted timely and appropriately according to a network real-time situation by communicating with the repeater (performing uplink and downlink (UL/DL) signal and/or information transmission). The repeater in the embodiments of the present disclosure may better enhance signal coverage and cope with environmental changes, thereby enabling to improve the transmission efficiency of an entire network.

According to one aspect of the embodiments of the present disclosure, a communication method of a repeater is provided, including:
receiving, by a repeater, first indication information transmitted by a network device,
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

According to another aspect of the embodiments of the present disclosure, a repeater is provided, including:
a receiving portion configured to receive first indication information transmitted by a network device,
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

According to another aspect of the embodiments of the present disclosure, a communication method of a network device is provided, including:
transmitting, by a network device, first indication information to a repeater,
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

According to another aspect of the embodiments of the present disclosure, a network device is provided, including:
a transmitting portion configured to transmit first indication information to a repeater,
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

According to another aspect of the embodiments of the present disclosure, a communication system is provided, including a network device and a terminal equipment, the communication system further including:
a network device configured to transmit first indication information, the first indication information being used to indicate a group of time units; and
a repeater configured to receive the first indication information, wherein a first time unit in the group of time units is available for the repeater to transmit a first signal generated by the repeater to the network device, and a second time unit in the group of time units is available for the repeater to transmit a second signal not generated by the repeater to the network device.

One of advantageous effects of the embodiments of the present disclosure lies in: a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

Referring to the later description and drawings, specific implementations of the present disclosure are disclosed in detail, indicating a manner that the principle of the present disclosure may be adopted. It should be understood that the implementations of the present disclosure are not limited in terms of the scope. Within the scope of the spirit and terms of the appended claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may also obtain other drawings based on the drawings under the premise that they do not pay inventive labor. In the drawings:
FIG. 1 is a schematic diagram of an application scenario of the embodiments of the present disclosure;
FIG. 2 is a schematic diagram of a TDD repeater;
FIG. 3 is a schematic diagram of a communication method of a repeater in the embodiments of the present disclosure;
FIG. 4 is an exemplary diagram in which a repeater forwards a downlink signal, in the embodiments of the present disclosure;
FIG. 5 is an exemplary diagram in which a repeater forwards an uplink signal, in the embodiments of the present disclosure;
FIG. 6 is an exemplary diagram in which a repeater receives a downlink signal, in the embodiments of the present disclosure;
FIG. 7 is an exemplary diagram in which a repeater transmits an uplink signal, in the embodiments of the present disclosure;
FIG. 8 is a schematic diagram of a time-frequency resource in the embodiments of the present disclosure;
FIG. 9 is another schematic diagram of a time-frequency resource in the embodiments of the present disclosure;
FIG. 10 is another schematic diagram of a time-frequency resource in the embodiments of the present disclosure;
FIG. 11 is another schematic diagram of a time-frequency resource in the embodiments of the present disclosure;
FIG. 12 is an exemplary diagram in which a repeater transmits a downlink signal, in the embodiments of the present disclosure;
FIG. 13 is an exemplary diagram in which a repeater receives a downlink signal, in the embodiments of the present disclosure;
FIG. 14 is a schematic diagram of a repeater in the embodiments of the present disclosure;
FIG. 15 is a schematic diagram of a communication method of a network device in the embodiments of the present disclosure;
FIG. 16 is a schematic diagram of a network device in the embodiments of the present disclosure; and
FIG. 17 is a schematic diagram of an electronic device in the embodiments of the present disclosure.

### DETAILED DESCRIPTION

Referring to the drawings, through the following Specification, the aforementioned and other features of the present disclosure will become obvious. The Specification and the figures specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of' or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on...... ", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

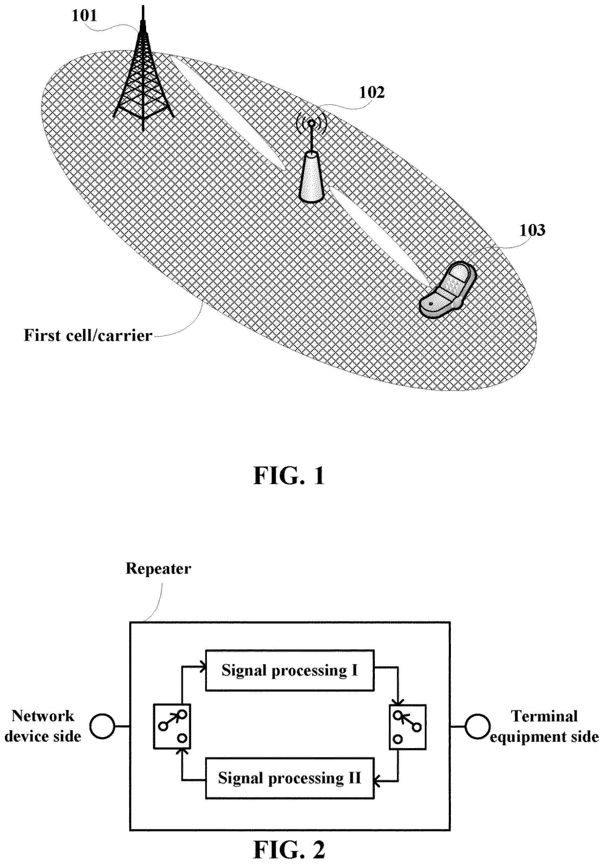

FIG. 1 is a schematic diagram of an application scenario of the embodiments of the present disclosure, as shown in FIG. 1, for convenience of description, description is made by taking "a network device (such as a 5G base station gNB) 101, a repeater 102 and a terminal equipment (UE) 103" as an example, the present disclosure is not limited to this. As shown in FIG. 1, the terminal equipment 103 establishes a connection with and communicates with the network device 101. In order to increase the quality of communication, a signal between the terminal equipment 103 and the network device 101 is forwarded via the repeater 102. Signal interaction among the network device 101, the terminal equipment 103 and the repeater 102 adopts a beam-based receiving and transmitting method.

As shown in FIG. 1, the network device 101 may have a first cell/carrier, the network device 101, the repeater 102 and the terminal equipment 103 may perform forwarding/communication in the first cell; however, the present disclosure is not limited to this, for example, the network device 101 may further have other cell/carrier.

In the embodiments of the present disclosure, transmission of existing or further implementable services may be carried out between the network device and the terminal equipment. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on.

In FIG. 1, the description is made by taking "a repeater may forward a signal between a network device and a terminal equipment" as an example, however, the present disclosure is not limited to this. For example, the repeater may serve as a second device, performs signal forwarding between a first device and a third device, and may communicate directly with the first device and/or the third device; the first device through the third device may be any device in the aforementioned network. In the following embodiments, the description is made by taking "the first device is a network device, and the third device is a terminal equipment" as an example.

FIG. 2 is a schematic diagram of a TDD repeater. As shown in FIG. 2, a Time Division Duplex (TDD) repeater has two passages. Antennas on both sides of the repeater are aligned respectively to a network device and a region where a terminal equipment to be served may exist, and forward a signal between the network device and the terminal equipment by using a time division mode.

A traditional repeater does not demodulate/decode a forwarded signal during forwarding. An antenna direction of the traditional repeater is basically fixed, and is usually manually set and adjusted at the time of initial installation, so that an antenna on a network device side points to a wave incoming direction of the network device, and an antenna on a terminal device side points to a place where the deployment needs to be enhanced. During the operation of the traditional repeater, an antenna direction does not change. In addition, the traditional repeater does not have a communication function and may not exchange information with a network device, so it does not support the network device to perform a self-adaptive and/or more dynamic configuration on it.

Compared to 3G and 4G systems, a 5G system deployed in higher frequency bands and millimeter wave frequency bands employs a more advanced and complex MIMO (Multiple Input Multiple Output) technology. In the 5G system, a directed antenna becomes a basic component of a network device and a terminal equipment, transmitting and receiving a signal based on the beam forming technology is a basic signal transmission mode in the 5G system.

In particular, the characteristics of high frequency and small wavelength of a millimeter wave band are more conducive to provision of an antenna panel containing more arrays in a network device and a terminal equipment. Increase in the number of antenna arrays helps more accurate beamforming, i.e., it is easier to form a narrow beam. The narrow beam converges energy, which helps to enhance a signal while reducing interference with other devices. On the other hand, due to accurate pointing of the narrow beam, the requirements for channel measurement and beam management are very high, so the 5G system supports more complex but accurate channel measurement, antenna calibration and beam management schemes, through which a network device may effectively and accurately control a receiving beam and a transmitting beam of a terminal equipment, so as to achieve a better communication effect.

The traditional repeater does not have a capability to communicate with a network device, and a repeater needs to detect/determine a relevant uplink and downlink configuration (TDD UL/DL config) in a network by itself. Then, in a downlink time unit of the network, the repeater switches to a downlink forwarding position, i.e., receives a signal from a network device side, and after processing such as amplification, sends out the signal from a terminal equipment side. In an uplink time unit of the network, the repeater switches to an uplink forwarding position, i.e., receives a signal from the terminal equipment side, and after processing such as amplification, sends out the signal from the network device side.

Thus, although the traditional repeater may help enhance a signal strength, it is not flexible enough to cope with complex environmental changes, thereby reducing the throughput of an entire network. In order to make forwarding of the repeater more flexible to adapt to the characteristics of a 5G network, the network needs to assist the repeater and may configure the forwarding of the repeater according to a real-time condition of the network; the repeater needs to have a capability to communicate with the network device, may receive auxiliary information and/or configuration information, etc. (such as a TDD UL DL configuration, an indication of a transmitting/receiving spatial filter, etc.) from the network device , and may also perform necessary feeding back and reporting.

In the process of research in related fields, the inventor finds that communication between a repeater and a network device needs generation of a signal transmitted to the network device, or needs processing of the signal transmitted by the network device. How to multiplex forwarding and communication functions of a repeater together may be a key point to realize a repeater having a communication function, and is also an urgent problem to realize the repeater with a function of communicating with a network.

Various implementations of the embodiments of the present disclosure will be described below with reference to the drawings. These implementations are exemplary only and are not limitations to the present disclosure.

In the embodiments of the present disclosure, a beam may also be expressed as a lobe, a reference signal (RS), a transmission configuration indication (TCI), a spatial domain filter, etc. Or, it may also be expressed as a beam index, a lobe index, a reference signal index, a transmission configuration indication index, a spatial domain filter index, etc. The reference signal is, for example, a Channel State Information Reference Signal (CSI-RS), a Sounding Reference Signal (SRS), an RS for use by a repeater, an RS transmitted by a repeater, etc. The TCI may also be expressed as a TCI state.

In the embodiments of the present disclosure, the repeater may also be expressed as a transponder, a radio frequency repeater, a relay, a radio frequency relay; or may also be expressed as a transponder node, a repeater node, a relay node, an intelligent transponder, an intelligent repeater, an intelligent relay, an intelligent transponder node, an intelligent repeater node, an intelligent relay node, etc., the present disclosure is not limited to this.

In the embodiments of the present disclosure, the network device may be a device of a serving cell of a terminal equipment, or a device of a cell where a repeater is located, or a device of a serving cell of a repeater, or a parent node of a repeater. The present disclosure does not limit the name of the repeater, as long as the device with said functions may be achieved, all are included in the scope of the repeater of the present disclosure.

### Embodiments of a first aspect

The embodiments of the present disclosure provide a communication method of a repeater, which described from a repeater side.

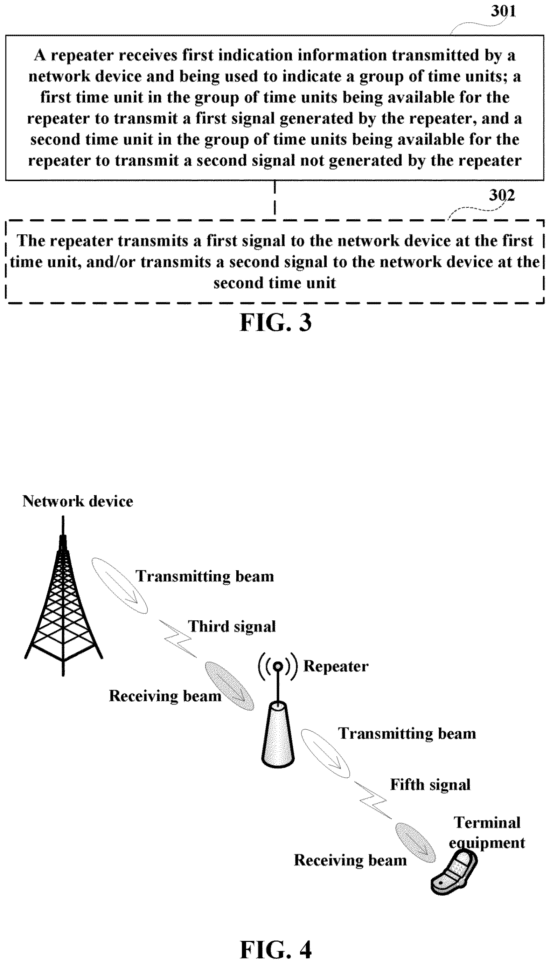

FIG. 3 is a schematic diagram of a communication method of a repeater in the embodiments of the present disclosure, as shown in FIG. 3, the method includes:
301, a repeater receives first indication information transmitted by a network device;
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

In some embodiments, first indication information may be an upper-layer signaling or a physical layer signaling, however the present disclosure is not limited to this. The upper-layer signaling may be, for example, a Radio Resource Control (RRC) signaling or a Media Access Control (MAC) signaling. The physical layer signaling may be a Physical Downlink Control Channel (PDCCH) or Downlink Control Information (DCI), and may also be called a dynamic signaling.

In some embodiments, the first indication information may be configured and/or indicated by one or more signaling. It may be configured and/or indicated by a network device to a repeater at a certain time, or may be configured and/or indicated by the network device to the repeater at multiple times respectively via one or more static signaling, semi-static signaling or dynamic signaling.

For example, the first indication information may be broadcast by a network device to the repeater via a common RRC signaling. A first time unit (e.g. U1) and/or a second time unit (e.g. U2) is/are at least configured in the common signaling. In addition, the common signaling may further be configured with other time units, such as a time unit (D) for downlink, and so on.

The repeater may transmit a first signal to the network device using the first time unit (e.g. U1) configured in the common signaling, and transmit a second signal to the network device using the second time unit (e.g. U2) configured in the common signaling.

For another example, the first indication information may be configured by a network device to the repeater via a common RRC signaling and a dedicated RRC signaling. A first time unit (e.g. U1) and/or a second time unit (e.g. U2) is/are at least configured in the common signaling. In addition, the common signaling may further be configured with other time units, such as a time unit (D) for downlink, and so on. The dedicated signaling may reconfigure other time unit(s) to be the first time unit (e.g. U1) and/or the second time unit (e.g. U2), etc.

The repeater may transmit a first signal to the network device using the first time unit (e.g. U1) jointly configured in the common signaling and the dedicated signaling, and transmit a second signal to the network device using the second time unit (e.g. U2) jointly configured in the common signaling and the dedicated signaling.

For another example, the first indication information may be indicated by a network device to the repeater via the common signaling and the dedicated signaling and then via a dynamic signaling (e.g. a PDCCH). A first time unit (e.g. U1) and/or a second time unit (e.g. U2) is/are at least configured in the common signaling. In addition, the common signaling may further be configured with other time units, such as a time unit (D) for downlink, and so on. The dedicated signaling may reconfigure other time unit(s) to be the first time unit (e.g. U1) and/or the second time unit (e.g. U2), etc., and the dynamic signaling may reconfigure other time unit(s) to be the first time unit (e.g. U1) and/or the second time unit (e.g. U2), etc.

The repeater may transmit a first signal to the network device using the first time unit (e.g. U1) jointly configured and indicated in the common signaling, the dedicated signaling and the dynamic signaling, and transmit a second signal to the network device using the second time unit (e.g. U2) jointly configured and indicated in the common signaling, the dedicated signaling and the dynamic signaling.

The above only schematically describes the first indication information, however the present disclosure is not limited to this.

Therefore, a time unit of uplink communication and uplink forwarding between a repeater and a network device may be configured by the network device, uplink transmission may be performed according to a network real-time situation, which may better enhance signal coverage and cope with environmental changes, thereby enabling to improve the transmission efficiency of the entire network.

In some embodiments, optionally, as shown in FIG. 3, the method may further include:
302, the repeater transmits a first signal to a network device at a first time unit, and/or transmits a second signal to the network device at a second time unit.

It should be noted that the above FIG. 3 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 3.

Therefore, uplink communication and uplink forwarding are time-division multiplexed, which has lower requirements on a device and is helpful to reduce the implementation cost of a repeater. The implementation cost reduction is conducive to future application of a repeater device in network deployment, and is also conducive to enhancing network deployment at a lower cost (such as improving network coverage).

In some embodiments, a network device indicates and/or configures a period of the group of time units to a repeater, and/or, indicates and/or configures a subcarrier interval to which the group of time units corresponds to the repeater. Configuring and indicating a period and/or a subcarrier interval may be performed together with first indication information, or may be performed separately independently of the first indication information.

In some embodiments, a time unit in the group of time units is at least one of a symbol, a slot, or a subframe. For example, it may be a symbol, or may be a slot, or may be both a symbol and a slot, etc., the present disclosure is not limited to this.

Moreover, a time unit in the embodiments of the present disclosure is not necessarily used by a repeater after it is configured and/or indicated by a network device to the repeater, i.e., a configured and/or indicated time unit may be repurposed or even not used by the repeater. For example, a time unit initially configured to be U1 by a common signaling may be configured to be downlink (D) by a dedicated signaling, or scheduled by a dynamic signaling to not to transmit a signal. "Available for or may be available for" in the embodiments of the present disclosure is from a point of view of indication or configuration, and does not represent an actual action of a repeater.

In the embodiments of the present disclosure, "a signal generated by a repeater" includes, for example, performing signal modulation/coding by a repeater, or performing sequence generation and modulation, etc. of a reference signal by a repeater. "A signal not generated by a repeater", for example, is also referred to as a forwarded signal, and a repeater does not demodulate/decode this signal, and performs amplification processing at most. For a specific signal, following embodiments may be referred to.

The above only describes each step or process related to the present disclosure, but the present disclosure is not limited to this. The method in the embodiments of the present disclosure may further include other steps or processes. For specific contents of these steps or processes, please refer to relevant technologies.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

### Embodiments of a second aspect

Based on the embodiments of the first aspect, forwarding/communication among a repeater and a network device and a third device (such as a terminal equipment) is described below. In the embodiments of the second aspect, a repeater may forward a signal between a network device and a third device (such as a terminal equipment), and may further communicate directly with the network device, the same contents as the embodiments of the first aspect will not be repeated for the sake of simplicity.

For the sake of simplicity, the signal that performs direct communication between a network device and a repeater or between a third device and a repeater may be called a communication signal. When transmitting the communication signal, the repeater needs to perform encoding and/or modulation, and when receiving the communication signal, the repeater needs to perform decoding and/or demodulation. In addition, the signal forwarded by a repeater may be called a forwarding signal, the repeater may perform signal processing such as amplification of the forwarding signal, but do not perform decoding and/or demodulation.

FIG. 4 is an exemplary diagram in which a repeater forwards a downlink signal, in the embodiments of the present disclosure. As shown in FIG. 4, a network device may use a transmitting beam to transmit a third signal to a repeater, the third signal, for example, is used for scheduling a terminal equipment. The repeater receives the third signal using a receiving beam (e.g. indicated or configured by the network device, and e.g. predefined), and performs signal processing on the third signal (e.g. amplification, etc.) to generate a fifth signal; the repeater may transmit the fifth signal to the terminal equipment using a transmitting beam (e.g. indicated or configured by the network device, and e.g. predefined). The terminal equipment receives the fifth signal using a receiving beam (e.g. also indicated or configured by the network device, and e.g. predefined).

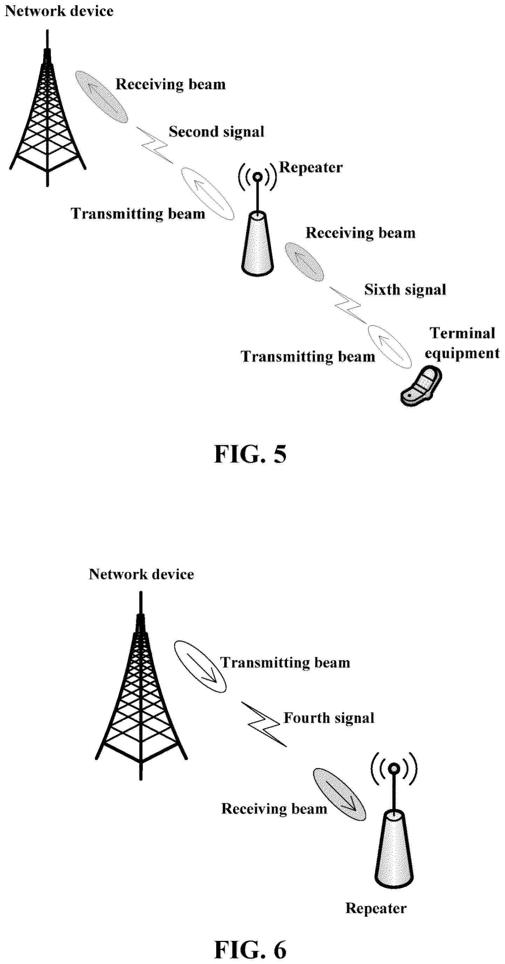

FIG. 5 is an exemplary diagram in which a repeater forwards an uplink signal, in the embodiments of the present disclosure. As shown in FIG. 5, the terminal equipment uses a transmitting beam (e.g. indicated or configured by the network device, and e.g. predefined) to transmit a sixth signal, the sixth signal is, for example, used by the terminal equipment to report to the network device. The repeater receives the sixth signal using a receiving beam (indicated or configured by the network device, and e.g. predefined), and performs signal processing on the sixth signal (e.g. amplification, etc.) to generate a second signal; the repeater may transmit the second signal to the network device using a transmitting beam (e.g. indicated or configured by the network device, and e.g. predefined). The network device may use a receiving beam to receive the second signal transmitted by the repeater.

The above exemplarily describes that a repeater forwards a signal (including an uplink forwarding signal and a downlink forwarding signal) between a network device and a terminal equipment, and the following describes a communication signal (including an uplink communication signal and a downlink communication signal) between the repeater and the network device.

FIG. 6 is an exemplary diagram in which a repeater receives a downlink signal, in the embodiments of the present disclosure. As shown in FIG. 6, a network device may use a transmitting beam to transmit a fourth signal to a repeater, the fourth signal, for example, is used for scheduling or configuring the repeater. The repeater receives the fourth signal using a receiving beam (e.g. indicated or configured by the network device, and e.g. predefined), and demodulates/decodes the fourth signal, so that corresponding processing may be carried out according to the content carried by the fourth signal, for example, obtaining information carried by the fourth signal and/or using a reference signal carried by the fourth signal to perform channel estimation or channel measurement, etc.

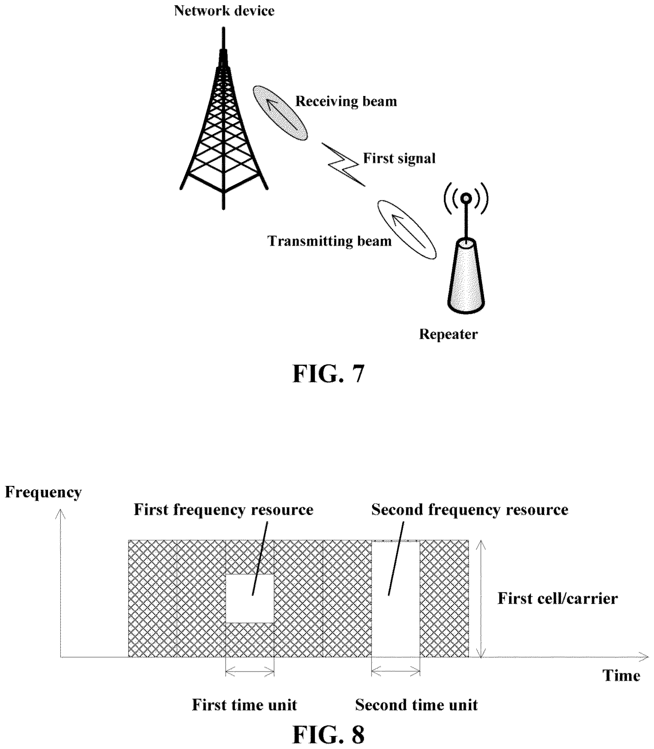

FIG. 7 is an exemplary diagram in which a repeater transmits an uplink signal, in the embodiments of the present disclosure. As shown in FIG. 7, the repeater generates (e.g. including modulation/encoding) a first signal, the first signal, for example, is used by the repeater to report a measurement result or feedback information, etc. to the network device. The repeater may transmit the first signal to the network device using a transmitting beam (e.g. indicated or configured by the network device, and e.g. predefined). The network device may use the receiving beam to receive the first signal transmitted by the repeater, so that corresponding processing may be carried out according to the content carried by the first signal.

FIG. 4 to FIG. 7 provide an exemplary description of a forwarding signal and a communication signal respectively, but the present disclosure is not limited to this.

Uplink transmission between a network device and a repeater is further described below.

In some embodiments, a repeater receives first indication information transmitted by a network device in a first cell.

In some embodiments, the repeater transmits a first signal and/or a second signal to the network device in the first cell.

In some embodiments, the first cell is a serving cell of the repeater. For example, the first cell is a primary cell of the repeater. However, the present disclosure is not limited to this, for example the first cell may not be a serving cell of the repeater, or the first cell may be a secondary cell of the repeater, etc.

In some embodiments, the first cell is a cell for the repeater to perform initial access; and/or, the first cell is a cell where the repeater establishes an RRC connection with a network device; and/or, the first cell is a cell where the repeater reestablishes an RRC connection with a network device; and/or, the first cell is a cell where the repeater camps; and/or, the first cell is a cell selected by the repeater in a cell selection process, or a cell selected in a cell re-selection process.

Situations of frequency resources and time domain resources are schematically described below.

In some embodiments, the repeater further receives second indication information transmitted by the network device, the second indication information being used to indicate and/or configure a first frequency resource, the first frequency resource being used by the repeater to transmit the first signal.

For example, the first frequency resource is a carrier to which a first cell corresponds, or an uplink bandwidth part (BWP) configured and/or indicated by the network device for the repeater, or an active uplink BWP configured by the network device for the repeater. However, the present disclosure is not limited to this.

FIG. 8 is a schematic diagram of a time-frequency resource in the embodiments of the present disclosure, in which the second frequency resource is a frequency resource receiving a forwarding signal by the repeater from the terminal equipment. As shown in FIG. 8, a first time unit for the repeater to transmit a first signal is different from a second time unit for transmitting a second signal, moreover, the first frequency resource is different from the second frequency resource. As shown in FIG. 8, both the first frequency resource and the second frequency resource may be located in a first cell/carrier in frequency, and a bandwidth of the first frequency resource is less than that of the second frequency resource.

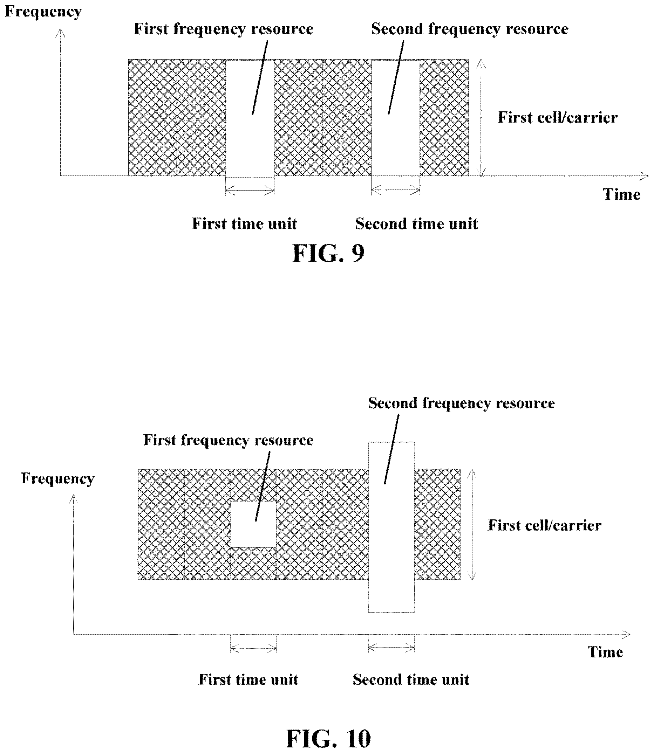

FIG. 9 is another schematic diagram of a time-frequency resource in the embodiments of the present disclosure, in which the second frequency resource is a frequency resource receiving a forwarding signal by the repeater from the terminal equipment. As shown in FIG. 9, a first time unit for the repeater to transmit a first signal is different from a second time unit for transmitting a second signal, moreover, the first frequency resource is the same as the second frequency resource. As shown in FIG. 9, both the first frequency resource and the second frequency resource may be located in a first cell/carrier in frequency, and a bandwidth of the first frequency resource is equal to that of the second frequency resource.

FIG. 10 is another schematic diagram of a time-frequency resource in the embodiments of the present disclosure, in which the second frequency resource is a frequency resource receiving a forwarding signal by the repeater from the terminal equipment. As shown in FIG. 10, a first time unit for the repeater to transmit a first signal is different from a second time unit for transmitting a second signal, moreover, the first frequency resource is different from the second frequency resource. As shown in FIG. 10, the first frequency resource may be all located in a first cell/carrier, and the second frequency resource may be partially located in the first cell/carrier; and a bandwidth of the first frequency resource is less than that of the second frequency resource, and the bandwidth of the second frequency resource may be greater than a bandwidth of the first cell/carrier.

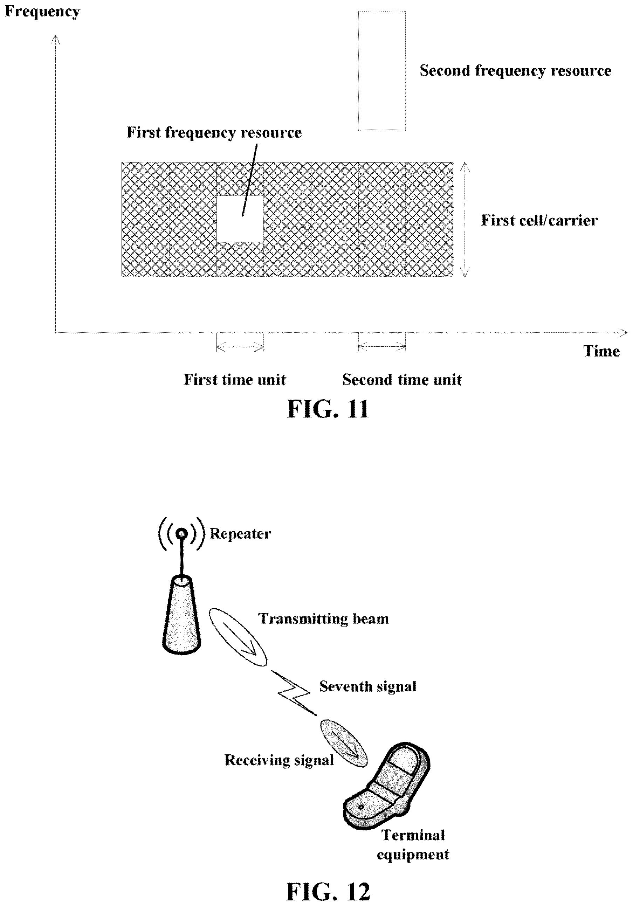

FIG. 11 is another schematic diagram of a time-frequency resource in the embodiments of the present disclosure, in which the second frequency resource is a frequency resource receiving a forwarding signal by the repeater from the terminal equipment. As shown in FIG. 11, a first time unit for the repeater to transmit a first signal is different from a second time unit for transmitting a second signal, moreover, the first frequency resource is different from the second frequency resource. As shown in FIG. 11, the first frequency resource may be all located in a first cell/carrier, and the second frequency resource does not overlap with the first cell/carrier in frequency; and a bandwidth of the first frequency resource is smaller than that of the second frequency resource.

The first signal and the second signal are schematically described below.

In some embodiments, the first signal includes at least one of the following: a physical uplink shared channel (PUSCH), a demodulation reference signal (DMRS), a sounding reference signal (SRS), a physical random access channel (PRACH), a physical uplink control channel (PUCCH), or a scheduling request (SR). However, the present disclosure is not limited to this, the first signal, for example, may further be other signal.

In some embodiments, the first signal is generated by a repeater at least using a cell ID of a first cell, or generation of the first signal is related to the cell ID of the first cell.

For example, the first signal includes a DMRS, sequence generation of the DMRS is related to the cell ID.

For another example, the first signal includes a PUSCH, a scrambling sequence of the PUSCH is related to the cell ID.

In some embodiments, the second signal is obtained by the repeater at least by amplifying a signal received by the repeater (such as the six signal shown in FIG. 5) at a second frequency resource, the second frequency resource being configured and/or indicated by the network device for the repeater.

In some embodiments, the signal received by the repeater at the second frequency resource (such as the sixth signal shown in FIG. 5) at least contains a signal from a third device (such as a terminal equipment). For example, the signal from the third device is generated and transmitted by the third device according to an indication of the network device.

In some embodiments, the first cell is a serving cell of the third device (such as the terminal equipment).

In some embodiments, the first cell is not a serving cell of the third device (such as the terminal equipment).

In some embodiments, the repeater transmits the first signal to the network device at the first time unit by using a first spatial filter, and transmit the second signal to the network device at the second time unit by using a second spatial filter.

For example, the network device may configure the repeater with two spatial filters for transmitting uplink signals between the network device and the repeater, respectively for transmitting the first signal and the second signal.

In some embodiments, the repeater transmits the first signal to the network device at the first time unit by using a first spatial filter, and transmit the second signal to the network device at the second time unit.

For example, the network device may configure the repeater with one spatial filter for transmitting uplink signals between the network device and the repeater, the spatial filter being used by the repeater to transmit the first signal and also by the repeater to transmit the second signal.

The above describes uplink transmission between the network device and the repeater. The following schematically describes downlink transmission between the network device and the repeater. A downlink communication signal of the repeater is combined with a downlink forwarding signal, and may also be time-division multiplexed together.

In some embodiments, the repeater receives a third signal (e.g. as shown in FIG. 4) and/or a fourth signal (e.g., as shown in FIG. 6) transmitted by the network device; the third signal is transmitted at least after being amplified by the repeater, the fourth signal is used to carry information and/or data transmitted by the network device to the repeater, and/or the fourth signal is used to configure an estimation or measurement channel for the repeater.

For example, the fourth signal is demodulated and/or decoded by the repeater.

In some embodiments, the group of time units further includes a third time unit, the third signal and/or the fourth signal being transmitted by the network device at the third time unit.

In some embodiments, downlink forwarding and downlink communication between a network device and a repeater may be combined in the same time unit; in addition, time units of three transmissions i.e., uplink communication, uplink forwarding and downlink forwarding (downlink communication) may be time-division multiplexed.

For example, the third signal and the fourth signal may be combined in the same signal (such as a ninth signal); time units of the first signal, the second signal and the ninth signal may be time-division multiplexed. That is, the first signal is transmitted by the repeater in a first time unit, the second signal is transmitted by the repeater at a second time unit, and the ninth signal (the third signal and/or the fourth signal) is transmitted by the network device in a third time unit.

In the process of research, the inventor further finds that between the network device and the repeater, compared with an uplink signal, signal combining of downlink communication and downlink forwarding has no high requirement on device implementation. Therefore, adopting a method of combining a downlink communication signal with a downlink forwarding signal helps to reduce indication signaling of a network device and improves the use efficiency of a wireless resource, thereby improving a network throughput.

In some embodiments, the group of time units further includes a third time unit and a fourth time unit, the third signal being transmitted by the network device at the third time unit, and the fourth signal being transmitted by the network device at the fourth time unit.

In some embodiments, time units of four transmissions i.e., uplink communication, uplink forwarding, downlink forwarding and downlink communication between a network device and a repeater may be time-division multiplexed.

For example, time units of the first signal, the second signal, the third signal and the fourth signal may be time-division multiplexed. That is, the first signal is transmitted by the repeater at a first time unit, the second signal is transmitted by the repeater at a second time unit, the third signal is transmitted by the network device at a third time unit, and the fourth signal is transmitted by the network device at a fourth time unit.

Therefore, adopting a method of time-division multiplexing of a downlink communication signal and a downlink forwarding signal is helpful to simplify management of wireless resources by a network device, thereby reducing the implementation cost of network device; on the other hand, may also simplify an implementation logic of a repeater and reduce the product design and production cost of the repeater.

In some embodiments, the fourth signal is a signal that a network device indicates a repeater to perform reception in a first cell, and/or the fourth signal is related to an identification (ID) of the first cell.

In some embodiments, the fourth signal is one or more of the following signals: a Physical Downlink Control Channel (PDCCH), a Physical Downlink Shared Channel (PDSCH), a Synchronization Signal Block (SSB), a Channel State Information Reference Signal (CSIRS), a De-Modulation Reference Signal (DMRS), a Phase Tracking Reference Signal (PTRS), a Remote Interference Management Reference Signal (RIMRS), a Positioning Reference Signal (PRS).

For example, the fourth signal is one or more of the following signals:
a Physical Downlink Control Channel (PDCCH) transmitted by a network device to a repeater, a scrambling sequence of the PDCCH being related to the cell ID;
a Physical Downlink Shared Channel (PDSCH) transmitted by a network device to a repeater, a scrambling sequence of the PDSCH being related to the cell ID;
a De-Modulation Reference Signal (DMRS) transmitted by a network device to a repeater, a sequence of the DMRS being related to the cell ID, the DMRS being used to demodulate a PDSCH and/or a PDCCH and/or a Physical Broadcast Channel (PBCH);
a Synchronization Signal Block (SSB) transmitted by a network device, sequence generation of a Primary Synchronization Signal (PSS) and a Secondary Synchronization Signal (SSS) in the SSB being related to the cell ID, and/or a PBCH scrambling sequence in the SSB being related to the cell ID.

In some embodiments, the fourth signal is used to carry a Media Access Control (MAC) signaling or a Radio Resource Control (RRC) signaling transmitted by a network device to a repeater.

The above only schematically describes the fourth signal, however the present disclosure is not limited to this, and it may be other signal.

In some embodiments, the repeater further receives third indication information transmitted by a network device, the third indication information being further used to indicate and/or configure a third frequency resource, the third frequency resource being used by the repeater to receive a third signal.

In some embodiments, the third indication information further indicates and/or configures a second frequency resource and/or a fourth frequency resource, the second frequency resource being used by a repeater to forward a second signal to a network device, and the fourth frequency resource being used by the repeater to forward a fourth signal.

In some embodiments, a bandwidth of the fourth frequency resource is greater than or equal to a bandwidth of the second frequency resource, and/or, a center frequency point of the fourth frequency resource and a center frequency point of the second frequency resource are identical.

In some embodiments, a repeater uses a third spatial filter to receive a third signal, and uses a fourth spatial filter to receive a fourth signal.

For example, the network device may configure the repeater with two spatial filters for receiving downlink signals between the network device and the repeater, respectively for receiving the third signal and the fourth signal.

In some embodiments, a repeater uses a third spatial filter to receive a third signal and a fourth signal.

For example, the network device may configure the repeater with one spatial filter for receiving downlink signals between the network device and the repeater, the spatial filter being used by the repeater to receive the third signal and also by the repeater to receive the fourth signal.

The above only describes each step or process related to the present disclosure, but the present disclosure is not limited to this. The method in the embodiments of the present disclosure may further include other steps or processes. For specific contents of these steps or processes, please refer to relevant technologies.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

### Embodiments of a third aspect

Based on the embodiments of the first and second aspects, forwarding/communication among a repeater and a network device and a third device (such as a terminal equipment) is described below. In the embodiments of the third aspect, a repeater may further communicate directly with a third device (such as a terminal equipment), the same contents as the embodiments of the first and second aspects will not be repeated for the sake of simplicity.

FIG. 12 is an exemplary diagram in which a repeater transmits a downlink signal, in the embodiments of the present disclosure. As shown in FIG. 12, the repeater generates (for example including modulation/encoding, or a sequence generation and modulation of a reference signal) a seventh signal, the seventh signal being used, for example, by a terminal equipment to perform channel measurement or estimation (such as a reference signal), or by the repeater to transmit information or data, etc. to the terminal equipment. The repeater may transmit the seventh signal to the terminal equipment using a transmitting beam (e.g. indicated or configured by the network device, and e.g. predefined). The terminal equipment may use a receiving beam to receive the seventh signal transmitted by the repeater, so that corresponding processing may be carried out according to the content carried by the seventh signal.

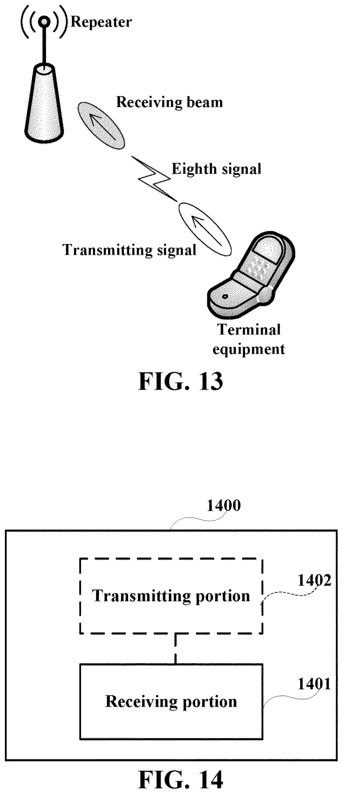

FIG. 13 is an exemplary diagram in which a repeater receives an uplink signal, in the embodiments of the present disclosure. As shown in FIG. 13, the terminal equipment transmits an eighth signal to the repeater using a transmitting beam, the eighth signal being used, for example, by the repeater to perform channel measurement or estimation (such as a reference signal), or by the terminal equipment to transmit information or data, etc. to the repeater. The repeater receives the eighth signal using a receiving beam (e.g. indicated or configured by the network device, and e.g. predefined), and demodulates/decodes the eighth signal, so that corresponding processing may be carried out according to the content carried by the eighth signal.

In some embodiments, the repeater processes at least a part of signals received at a second frequency resource.

In some embodiments, the processing includes: demodulating and/or decoding the at least a part of signals received at the second frequency resource, and/or, performing channel estimation and/or channel measurement by using the at least a part of signals received at the second frequency resource.

For example, the repeater receives a tenth signal from the terminal equipment, the tenth signal includes the sixth signal shown in FIG. 5 and the eighth signal shown in FIG. 13. For example, the sixth signal and the eighth signal are combined into the same signal (the tenth signal) and then transmitted by the terminal equipment to the repeater, the repeater may demodulate and/or decode at least a part of the tenth signal to obtain the tenth signal.

In some embodiments, the at least a part of signals received at the second frequency resource at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a preamble signal, or a Phase Tracking Reference signal (PTRS).

For example, the at least a part of signals received at the second frequency resource at least includes an SRS, the SRS being used by a repeater to: measure channel quality with a third device, and/or determine a transmitting spatial filter of the third device, and/or determine a transmitting spatial filter facing the third device; and/or, estimate a channel with the third device; and/or, estimate and/or correct a channel propagation delay with a third device; and/or, generate reporting information that is transmitted to the network device and is related to a channel with the third device.

For another example, the at least a part of signals received at the second frequency resource at least includes the DMRS and the PUSCH, the DMRS being used by the repeater to demodulate and/or decode the PUSCH.

For another example, the at least a part of signals received at the second frequency resource at least includes the DMRS and the PUCCH, the DMRS being used by the repeater to demodulate and/or decode the PUCCH.

For another example, the signal from the terminal equipment at least includes the PTRS, the PTRS being used by the repeater to estimate phase noise.

For another example, the at least a part of signals received at the second frequency resource at least includes the RACH or the preamble signal, the RACH or preamble signal being used by the repeater to: assist a third device for initial access; and/or, estimate a channel with the third device; and/or, estimate and/or correct a channel propagation delay with a third device; and/or, obtain information from the third device.

In some embodiments, the group of time units further includes an eighth time unit, the eighth time unit being used by a repeater to receive an eighth signal according to an indication of a network device.

In some embodiments, the repeater demodulates and/or decodes the eighth signal.

In some embodiments, the eighth signal at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a preamble signal, or a Phase Tracking Reference signal (PTRS).

In some embodiments, the group of time units further includes a seventh time unit, the seventh time unit being used by a repeater to transmit a seventh signal according to an indication of a network device.

In some embodiments, the repeater receives one or more parameters for generating the seventh signal, as indicated by the network device.

In some embodiments, the seventh signal is an SSB, the SSB being used by the terminal equipment to perform at least one of the following processing: initial access, channel estimation, channel quality measurement, measurement of a transmitting spatial filter, or measurement of a receiving spatial filter.

In some embodiments, the seventh signal is a reference signal, the reference signal being used by the terminal equipment to perform at least one of the following processing: channel estimation, channel quality measurement, measurement of a transmitting spatial filter, or measurement of a receiving spatial filter.

For example, the seventh signal is a Sounding Reference Signal (SRS), or a Channel State Information Reference Signal (CSIRS), or a Tracking Reference Signal (TRS), or a Positioning Reference Signal (PRS), or a Random Access Channel (RACH).

In some embodiments, the seventh signal is a DMRS and/or a data channel, the DMRS being used to assist in reception of the data channel, and the data channel being used to carry information and/or data transmitted by the repeater to the terminal equipment.

In some embodiments, uplink forwarding and uplink communication between a repeater and a terminal equipment may be combined in the same time unit; in addition, time units of three transmissions i.e., downlink communication, downlink forwarding and downlink forwarding (uplink communication) may be time-division multiplexed.

In the process of research, the inventor further finds that between the repeater and the terminal equipment, compared with a downlink signal, signal combining of uplink communication and uplink forwarding has no high requirement on device implementation. Therefore, adopting a method of combining an uplink communication signal with an uplink forwarding signal helps to reduce indication signaling of a network device and improves the use efficiency of a wireless resource, thereby improving a network throughput.

For example, the sixth signal and the eighth signal may be combined in the same signal (such as a tenth signal); time units of the seventh signal, the fifth signal, and the tenth signal may be time-division multiplexed. That is, the seventh signal is transmitted by the repeater at a seventh time unit, the fifth signal is transmitted by the repeater at a fifth time unit, and the tenth signal (the sixth signal and/or the eighth signal) is transmitted by the terminal equipment at a sixth time unit.

In some embodiments, time units of four transmissions i.e., uplink communication, uplink forwarding, downlink forwarding and downlink communication between a repeater and a terminal equipment may be time-division multiplexed. Therefore, it is helpful to simplify management of wireless resources by a network device, thereby reducing the implementation cost of the network device.

For example, time units of the fifth signal, the sixth signal, the seventh signal and the eighth signal may be time-division multiplexed. That is, the fifth signal is transmitted by the repeater at a fifth time unit, the seventh signal is transmitted by the repeater at a seventh time unit, the sixth signal is transmitted by the terminal equipment at a sixth time unit, and the eighth signal is transmitted by the terminal equipment at an eighth time unit.

The above only describes each step or process related to the present disclosure, but the present disclosure is not limited to this. The method in the embodiments of the present disclosure may further include other steps or processes. For specific contents of these steps or processes, please refer to relevant technologies.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, transmitting a signal from a repeater to a third device or receiving a signal from the third device helps to improve accuracy of channel measurement between the repeater and the third device, and provides a basis for a network device to configure receiving and transmitting spatial filters of the repeater and/or the third device more accurately. An accurate spatial filter configuration helps to improve signal transmission quality and efficiency, thereby improving a spectrum resource utilization rate.

In addition, a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

### Embodiments of a fourth aspect

The embodiments of the present disclosure provide a repeater, the repeater may, for example, be a network device or a terminal equipment, or may also be one or more parts or components configured on the network device or the terminal equipment.

FIG. 14 is a schematic diagram of a repeater in the embodiments of the present disclosure. The principle of the repeater to solve a problem is the same as the method in the embodiments of the first to third aspects, thus its specific implementation may refer to the embodiments of the first to third aspects, and the same contents will not be repeated.

As shown in FIG. 14, a repeater 1400 in the embodiments of the present disclosure includes:
a receiving portion 1401 configured to receive first indication information transmitted by a network device;
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

In some embodiments, as shown in FIG. 14, the repeater 1400 may further include:
a transmitting portion 1402 configured to transmit the first signal to the network device at the first time unit, and/or transmit the second signal to the network device at the second time unit.

In some embodiments, the receiving portion 1401 is further configured to: receive a period of the group of time units indicated and/or configured by the network device, and/or receive a subcarrier interval to which the group of time units correspond indicated and/or configured by the network device.

In some embodiments, the receiving portion 1401 receives the first indication in a first cell.

In some embodiments, the transmitting portion 1402 transmits the first signal and/or the second signal to the network device in the first cell.

In some embodiments, the first cell is a serving cell of the repeater; and/or
the first cell is a cell where the repeater performs initial access; and/or,
the first cell is a cell where the repeater establishes radio resource control connection with the network device; and/or,
the first cell is a cell where the repeater reestablishes radio resource control connection with the network device; and/or,
the first cell is a cell where the repeater camps; and/or,
the first cell is a cell selected by the repeater in a cell selection process or in a cell reselection process.

In some embodiments, the receiving portion 1401 is further configured to: receive second indication information from the network device, the second indication information being used to indicate and/or configure a first frequency resource, the first frequency resource being used by the repeater to transmit the first signal.

In some embodiments, the first frequency resource is a carrier to which the first cell corresponds, or an uplink bandwidth part configured and/or indicated by the network device for the repeater, or an active uplink bandwidth part configured by the network device for the repeater.

In some embodiments, the first signal includes at least one of the following: a physical uplink shared channel (PUSCH), a demodulation reference signal (DMRS), a sounding reference signal (SRS), a physical random access channel (PRACH), a physical uplink control channel (PUCCH), or a scheduling request (SR).

In some embodiments, the second signal is obtained by the repeater at least by amplifying a signal received by the repeater at a second frequency resource, the second frequency resource being configured and/or indicated by the network device for the repeater.

In some embodiments, the receiving portion 1401 is further configured to: receive a third signal and/or a fourth signal transmitted by the network device, the third signal being transmitted after being at least amplified by the repeater, and the fourth signal being used to carry information and/or data transmitted by the network device to the repeater, or the fourth signal being used to configure the repeater to perform channel estimation and/or measurement.

In some embodiments, the group of time units further includes a third time unit, the third signal and the fourth signal being transmitted by the network device at the third time unit.

In some embodiments, the group of time units further includes a third time unit and a fourth time unit, the third signal being transmitted by the network device at the third time unit, and the fourth signal being transmitted by the network device at the fourth time unit.

In some embodiments, the fourth signal is one or more of the following signals: a Physical Downlink Control Channel (PDCCH), a Physical Downlink Shared Channel (PDSCH), a Synchronization Signal Block (SSB), a Channel State Information Reference Signal (CSIRS), a De-Modulation Reference Signal (DMRS), a Phase Tracking Reference Signal (PTRS), a Remote Interference Management Reference Signal (RIMRS), a Positioning Reference Signal (PRS).

In some embodiments, the receiving portion 1401 is further configured to: receive third indication information from the network device, the third indication information indicating and/or configuring a third frequency resource, the third frequency resource being used by the repeater to receive the third signal.

In some embodiments, the third indication information is further used to indicate and/or configure a second frequency resource and/or a fourth frequency resource, the second frequency resource being used by the repeater to forward the second signal to the network device, and the fourth frequency resource being used by the repeater to forward the fourth signal.

In some embodiments, a bandwidth of the fourth frequency resource is greater than or equal to a bandwidth of the second frequency resource, and/or, a center frequency point of the fourth frequency resource and a center frequency point of the second frequency resource are identical.

In some embodiments, the transmitting portion 1402 is further configured to: transmit the first signal to the network device at the first time unit by using a first spatial filter, and transmit the second signal to the network device at the second time unit by using a second spatial filter.

In some embodiments, the transmitting portion 1402 is further configured to: transmit the first signal to the network device at the first time unit and transmit the second signal to the network device at the second time by using a first spatial filter.

In some embodiments, the receiving portion 1401 is further configured to: receive fourth indication information from the network device, the fourth indication information indicating that the repeater processes at least a part of signals received at the second frequency resource;

In some embodiments, the processing includes: demodulating and/or decoding the at least a part of signals received at the second frequency resource, and/or, performing channel estimation and/or channel measurement by using the at least a part of signals received at the second frequency resource.

In some embodiments, the group of time units further includes an eighth time unit, the eighth time unit being used by the repeater to receive an eighth signal according to an indication of the network device.

In some embodiments, the group of time units further includes a seventh time unit, the seventh time unit being used by the repeater to transmit a seventh signal according to an indication of the network device.

It's worth noting that the above only describes components or modules related to the present disclosure, but the present disclosure is not limited to this. The repeater 1400 in the embodiments of the present disclosure may further include other components or modules. For detailed contents of these components or modules, relevant technologies may be referred to.

Moreover, for the sake of simplicity, FIG. 14 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

### Embodiments of a fifth aspect

The embodiments of the present disclosure provide a communication method of a network device, which is described from a network device side, the contents same as the embodiments of the first to third aspects are not repeated.

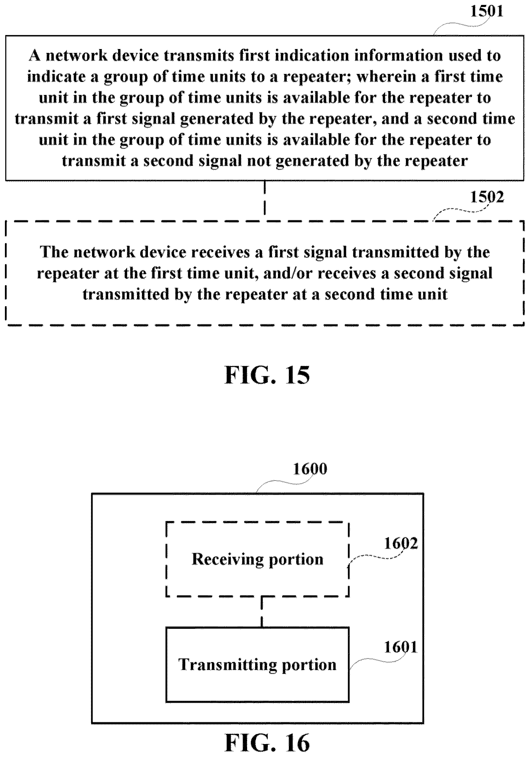

FIG. 15 is a schematic diagram of a communication method of a network device in the embodiments of the present disclosure, as shown in FIG. 15, the method includes:
1501, a network device transmits first indication information to a repeater;
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

In some embodiments, optionally, as shown in FIG. 15, the method may further include:
1502, the network device receives a first signal transmitted by a repeater at a first time unit, and/or receives a second signal transmitted by the repeater at a second time unit.

It should be noted that the above FIG. 15 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 15.

In some embodiments, the network device indicates and/or configures a period of the group of time units to the repeater, and/or, indicates and/or configures a subcarrier interval to which the group of time units corresponds to the repeater.

In some embodiments, a time unit in the group of time units is at least one of a symbol, a slot, or a subframe.

In some embodiments, the network device transmits the first indication information to the repeater in a first cell.

In some embodiments, the network device receives the first signal and/or the second signal transmitted by the repeater in the first cell.

In some embodiments, the first cell is a serving cell of the repeater.

In some embodiments, the first cell is a primary cell of the repeater.

In some embodiments, the first cell is a cell where the repeater performs initial access; and/or,
the first cell is a cell where the repeater establishes an RRC connection with a network device; and/or,
the first cell is a cell where the repeater reestablishes an RRC connection with a network device; and/or,
the first cell is a cell where the repeater camps; and/or,
the first cell is a cell selected by the repeater in a cell selection process or in a cell reselection process.

In some embodiments, the network device further transmits second indication information to the repeater, the second indication information being used to indicate and/or configure a first frequency resource, the first frequency resource being used by the repeater to transmit the first signal.

In some embodiments, the first frequency resource is a carrier to which a first cell corresponds, or an uplink bandwidth part (BWP) configured and/or indicated by the network device for the repeater, or an active uplink BWP configured by the network device for the repeater.

In some embodiments, the first signal includes at least one of the following: a physical uplink shared channel (PUSCH), a demodulation reference signal (DMRS), a sounding reference signal (SRS), a physical random access channel (PRACH), a physical uplink control channel (PUCCH), or a scheduling request (SR).

In some embodiments, the first signal is generated by the repeater at least using a cell ID of a first cell, or generation of the first signal is related to the cell ID of the first cell.

In some embodiments, the first signal includes a DMRS, sequence generation of the DMRS is related to the cell ID.

In some embodiments, the first signal includes a PUSCH, a scrambling sequence of the PUSCH is related to the cell ID.

In some embodiments, the second signal is obtained by the repeater at least by amplifying a signal received by the repeater at a second frequency resource, the second frequency resource being configured and/or indicated by the network device for the repeater.

In some embodiments, the signal received by the repeater at the second frequency resource at least contains a signal from a third device.

In some embodiments, the first cell is a serving cell of the third device.

In some embodiments, the first cell is not a serving cell of the third device.

In some embodiments, the network device transmits a third signal to the repeater and/or indicates the repeater to receive a fourth signal, the third signal being transmitted after being at least amplified by the repeater, and the fourth signal being used to carry information and/or data transmitted by the network device to the repeater, or the fourth signal being used to configure the repeater to perform channel estimation and/or measurement.

In some embodiments, the group of time units further includes a third time unit, the third signal and the fourth signal being transmitted by the network device at the third time unit.

In some embodiments, the group of time units further includes a third time unit and a fourth time unit, the third signal being transmitted by the network device at the third time unit, and the fourth signal being transmitted by the network device at the fourth time unit.

In some embodiments, the fourth signal is a signal that the network device indicates the repeater to receive in a first cell, and/or the fourth signal is related to an identification (ID) of the first cell.

In some embodiments, the fourth signal is one or more of the following signals: a Physical Downlink Control Channel (PDCCH), a Physical Downlink Shared Channel (PDSCH), a Synchronization Signal Block (SSB), a Channel State Information Reference Signal (CSIRS), a De-Modulation Reference Signal (DMRS), a Phase Tracking Reference Signal (PTRS), a Remote Interference Management Reference Signal (RIMRS), and a Positioning Reference Signal (PRS).

In some embodiments, the fourth signal is one or more of the following signals:
a Physical Downlink Control Channel (PDCCH) transmitted by the network device to the repeater, a scrambling sequence of the PDCCH being related to the cell ID;
a Physical Downlink Shared Channel (PDSCH) transmitted by the network device to the repeater, a scrambling sequence of the PDSCH being related to the cell ID;
a De-Modulation Reference Signal (DMRS) transmitted by the network device to the repeater, a sequence of the DMRS being related to the cell ID, the DMRS being used to demodulate a PDSCH and/or a PDCCH and/or a Physical Broadcast Channel (PBCH); and
a Synchronization Signal Block (SSB) transmitted by the network device, sequence generation of a Primary Synchronization Signal (PSS) and a Secondary Synchronization Signal (SSS) in the SSB being related to the cell ID, and/or a PBCH scrambling sequence in the SSB being related to the cell ID.

In some embodiments, the fourth signal is used to carry a MAC signaling or an RRC signaling transmitted by the network device to the repeater.

In some embodiments, the network device further transmits third indication information to the repeater, the third indication information being used to indicate and/or configure a third frequency resource, the third frequency resource being used by the repeater to receive the third signal.

In some embodiments, the third indication information further indicates and/or configures a second frequency resource and/or a fourth frequency resource, the second frequency resource being used by the repeater to forward the second signal to the network device, and the fourth frequency resource being used by the repeater to forward the fourth signal.

In some embodiments, a bandwidth of the fourth frequency resource is greater than or equal to a bandwidth of the second frequency resource, and/or, a center frequency point of the fourth frequency resource and a center frequency point of the second frequency resource are identical.

In some embodiments, the network device indicates the repeater to transmit the first signal to the network device at the first time unit by using a first spatial filter, and to transmit the second signal to the network device at the second time unit by using a second spatial filter.

In some embodiments, the network device indicates the repeater to transmit the first signal to the network device at the first time unit by using a first spatial filter, and to transmit the second signal to the network device at the second time unit.

In some embodiments, the network device indicates the repeater to receive the third signal by using a third spatial filter, and to receive the fourth signal by using a fourth spatial filter.

In some embodiments, the network device indicates the repeater to receive the third signal by using a third spatial filter, and to receive the fourth signal.

In some embodiments, the network device transmits fourth indication information to the repeater, the fourth indication information indicating that the repeater processes at least a part of signals received at the second frequency resource.

In some embodiments, the processing includes: demodulating and/or decoding the at least a part of signals received at the second frequency resource, and/or, performing channel estimation and/or channel measurement by using the at least a part of signals received at the second frequency resource.

In some embodiments, the at least a part of signals received at the second frequency resource at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a Phase Tracking Reference signal (PTRS).

In some embodiments, the at least a part of signals received at the second frequency resource at least includes the SRS, the SRS being used by the repeater to:
measure channel quality with a third device, and/or,
determine a transmitting spatial filter of the third device, and/or,
determine a transmitting spatial filter facing the third device, and/or,
estimate a channel with the third device, and/or,
estimate and/or correct a channel propagation delay with the third device, and/or,
generate reporting information transmitted to the network device and related to a channel with the third device.

In some embodiments, the at least a part of signals received at the second frequency resource at least includes the DMRS and the PUSCH, the DMRS being used by the repeater to demodulate and/or decode the PUSCH.

In some embodiments, the at least a part of signals received at the second frequency resource at least includes the DMRS and the PUCCH, the DMRS being used by the repeater to demodulate and/or decode the PUCCH.

In some embodiments, the at least a part of signals received at the second frequency resource includes the PTRS, the PTRS being used by the repeater to estimate phase noise.

In some embodiments, the at least a part of signals received at the second frequency resource at least includes the RACH or leading signal, the RACH or leading signal being used by the repeater to:
assist a third device to perform initial access; and/or,
estimate a channel with the third device, and/or,
estimate and/or correct a channel propagation delay with the third device, and/or,
acquire information from the third device.

In some embodiments, the network device indicates to the repeater a parameter used for the processing.

In some embodiments, the group of time units further includes an eighth time unit, the eighth time unit being used by the repeater to receive an eighth signal according to an indication of the network device.

In some embodiments, the network device indicates the repeater to demodulate and/or decode the eighth signal.

In some embodiments, the eighth signal at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a Phase Tracking Reference signal (PTRS).

In some embodiments, the group of time units further includes a seventh time unit, the seventh time unit being used by the repeater to transmit a seventh signal according to an indication of the network device.

In some embodiments, the network device indicates to the repeater a parameter used to generate the seventh signal.

In some embodiments, the seventh signal is an SSB, the SSB being used by the terminal equipment to perform at least one of the following processing: initial access, channel estimation, channel quality measurement, measurement of a transmitting spatial filter, or measurement of a receiving spatial filter.

In some embodiments, the seventh signal is a reference signal, the reference signal being used by the terminal equipment to perform at least one of the following processing: channel estimation, channel quality measurement, measurement of a transmitting spatial filter, or measurement of a receiving spatial filter.

In some embodiments, the seventh signal is a Sounding Reference Signal (SRS), or a Channel State Information Reference Signal (CSIRS), or a Tracking Reference Signal (TRS), or a Positioning Reference Signal (PRS), or a Random Access Channel (RACH).

In some embodiments, the seventh signal is a DMRS and/or a data channel, the DMRS being used to assist in reception of the data channel, and the data channel being used to carry information and/or data transmitted by the repeater to the terminal equipment.

The above only describes each step or process related to the present disclosure, but the present disclosure is not limited to this. The method in the embodiments of the present disclosure may further include other steps or processes. For specific contents of these steps or processes, please refer to relevant technologies.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, a time unit of communication and forwarding between a repeater and a network device may be configured by the network device, whereby signal transmission may be performed according to a network real-time situation, which may better enhance signal coverage and cope with environmental changes, thereby enabling to improve the transmission efficiency of the entire network.

### Embodiments of a sixth aspect

The embodiments of the present disclosure provide a network device.

FIG. 16 is a schematic diagram of a network device in the embodiments of the present disclosure. The principle of the network device to solve a problem is the same as the method in the embodiments of the first to fifth aspects, thus its specific implementation may refer to the embodiments of the first to fifth aspects, and the same contents will not be repeated.

As shown in FIG. 16, a network device 1600 in the embodiments of the present disclosure includes:
a transmitting portion 1601 configured to transmit first indication information to a repeater;
wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

In some embodiments, as shown in FIG. 16, the network device 1600 may further include:
a receiving portion 1602 configured to receive the first signal transmitted by the repeater at a first time unit, and/or receive the second signal transmitted by the repeater at the second time unit.

It's worth noting that the above only describes components or modules related to the present disclosure, but the present disclosure is not limited to this. The network device 1600 in the embodiments of the present disclosure may further include other components or modules. For detailed contents of these components or modules, relevant technologies may be referred to.

Moreover, for the sake of simplicity, FIG. 16 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

According to the embodiments of the present disclosure, a time unit of communication and forwarding between a repeater and a network device may be configured by the network device, whereby the forwarding of the repeater may be adjusted timely according to a network real-time situation by the communication with the repeater, which may better enhance signal coverage and cope with environmental changes, thereby enabling to improve the transmission efficiency of the entire network.

### Embodiments of a seventh aspect

The embodiments of the present disclosure provide a communication system. FIG. 1 is a schematic diagram of a communication system in the embodiments of the present disclosure. As shown in FIG. 1, a communication system includes a network device 101, a repeater 102 and a terminal equipment 103. For the sake of simplicity, FIG. 1 only takes a network device, a repeater and a terminal equipment as examples to describe, but the embodiments of the present disclosure are not limited to this.

In the embodiments of the present disclosure, transmission of existing or further implementable services may be carried out between the network device 101 and the terminal equipment 103. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on. The repeater 102 is configured to perform the communication method described in the embodiments of the first to third aspects, and the network device 101 is configured to perform the communication method described in the embodiments of the fifth aspect, their contents are incorporated here and are not repeated here.

The embodiments of the present disclosure further provide an electronic device, the electronic device e.g. is a repeater or a network device.

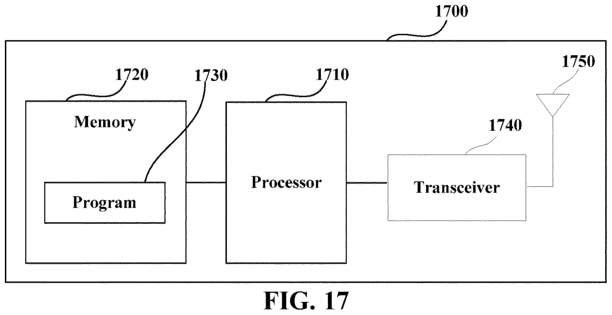

FIG. 17 is a schematic diagram of composition of an electronic device in the embodiments of the present disclosure. As shown in FIG. 17, an electronic device 1700 may include: a processor 1710 (such as a central processing unit (CPU)) and a memory 1720; the memory 1720 is coupled to the processor 1710. The memory 1720 may store various data; moreover, also stores a program 1730 for information processing, and executes the program 1730 under the control of the processor 1710.

For example, the processor 1710 may be configured to execute a program to implement the communication method as described in the embodiments of the first aspect. For example, the processor 1710 may be configured to perform the following control: receiving first indication information transmitted by a network device, wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

For example, the processor 1710 may be configured to execute a program to implement the communication method as described in the embodiments of the fifth aspect. For example, the processor 1710 may be configured to perform the following control: transmitting first indication information to a repeater, wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.

In addition, as shown in FIG. 17, the repeater 1700 may further include: a transceiver 1740 and an antenna 1750, etc., wherein the functions of said components are similar to relevant arts, which are not repeated here. It's worth noting that the electronic device 1700 does not have to include all the components shown in FIG. 17. Moreover, the electronic device 1700 may also include components not shown in FIG. 17, related arts may be referred to.

The embodiments of the present disclosure further provide a computer readable program, wherein when the program is executed in a repeater, the program enables a computer to execute the communication method as described in the embodiments of the first to third aspects, in the repeater.

The embodiments of the present disclosure further provide a storage medium in which a computer readable program is stored, wherein the computer readable program enables a computer to execute the communication method as described in the embodiments of the first to third aspects, in a repeater.

The embodiments of the present disclosure further provide a computer readable program, wherein when a network device executes the program, the program enables a computer in the network device to execute the communication method described in the embodiments of the fifth aspect.

The embodiments of the present disclosure further provide a storage medium in which a computer readable program is stored, wherein the computer readable program enables a computer to execute the communication method as described in the embodiments of the fifth aspect, in a network device.

The device and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram and/or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram and/or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram and/or one or more combinations in the functional block diagram as described in the drawings may be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A communication method of a repeater, including:
   transmitting, by a network device, first indication information to a repeater;
   wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.
2. The method according to Supplement 1, wherein the method further includes:
   receiving, by the network device, the first signal transmitted by the repeater at the first time unit, and/or receiving the second signal transmitted by the repeater at the second time unit.
3. The method according to Supplement 1 or 2, wherein the network device indicates and/or configures a period of the group of time units to the repeater, and/or, indicates and/or configures a subcarrier interval to which the group of time units corresponds to the repeater.
4. The method according to any one of Supplements 1 to 3, wherein a time unit in the group of time units is at least one of a symbol, a slot, or a subframe.
5. The method according to any one of Supplements 1 to 4, wherein the network device transmits the first indication information to the repeater in a first cell.
6. The method according to Supplement 2, wherein the network device receives the first signal and/or the second signal transmitted by the repeater in the first cell.
7. The method according to Supplement 5 or 6, wherein the first cell is a serving cell of the repeater.
8. The method according to Supplement 7, wherein the first cell is a primary cell of the repeater.
9. The method according to any one of Supplements 5 to 8, wherein
   the first cell is a cell where the repeater performs initial access; and/or,
   the first cell is a cell where the repeater establishes an RRC connection with a network device; and/or,
   the first cell is a cell where the repeater reestablishes an RRC connection with a network device; and/or,
   the first cell is a cell where the repeater camps; and/or,
   the first cell is a cell selected by the repeater in a cell selection process or in a cell reselection process.
10. The method according to any one of Supplements 5 to 9, wherein the method further includes:
   further transmitting, by the network device, second indication information to the repeater, the second indication information being used to indicate and/or configure a first frequency resource, the first frequency resource being used by the repeater to transmit the first signal.
11. The method according to Supplement 10, wherein the first frequency resource is a carrier to which a first cell corresponds, or an uplink bandwidth part (BWP) configured and/or indicated by the network device for the repeater, or an active uplink BWP configured by the network device for the repeater.
12. The method according to any one of Supplements 1 to 11, wherein the first signal includes at least one of the following: a physical uplink shared channel (PUSCH), a demodulation reference signal (DMRS), a sounding reference signal (SRS), a physical random access channel (PRACH), a physical uplink control channel (PUCCH), or a scheduling request (SR).
13. The method according to any one of Supplements 1 to 12, wherein the first signal is generated by the repeater at least using a cell ID of a first cell, or generation of the first signal is related to the cell ID of the first cell.
14. The method according to Supplement 13, wherein the first signal includes a DMRS, sequence generation of the DMRS is related to the cell ID.
15. The method according to Supplement 13, wherein the first signal includes a PUSCH, a scrambling sequence of the PUSCH is related to the cell ID.
16. The method according to any one of Supplements 1 to 15, wherein the second signal is obtained by the repeater at least by amplifying a signal received by the repeater at a second frequency resource, the second frequency resource being configured and/or indicated by the network device for the repeater.
17. The method according to Supplement 16, wherein the signal received by the repeater at the second frequency resource at least contains a signal from a third device.
18. The method according to Supplement 17, wherein the first cell is a serving cell of the third device.
19. The method according to Supplement 17, wherein the first cell is not a serving cell of the third device.
20. The method according to Supplements 1 to 19, wherein the method further includes:
   transmitting, by the network device, a third signal to the repeater and/or indicating, by the network device, the repeater to receive a fourth signal, the third signal being transmitted after being at least amplified by the repeater, and the fourth signal being used to carry information and/or data transmitted by the network device to the repeater, or the fourth signal being used to configure the repeater to perform channel estimation and/or measurement.
21. The method according to Supplement 20, wherein the group of time units further includes a third time unit, the third signal and the fourth signal being transmitted by the network device at the third time unit.
22. The method according to Supplement 20, wherein the group of time units further includes a third time unit and a fourth time unit, the third signal being transmitted by the network device at the third time unit, and the fourth signal being transmitted by the network device at the fourth time unit.
23. The method according to any one of Supplements 20 to 22, wherein the fourth signal is a signal that the network device indicates the repeater to receive in a first cell, and/or the fourth signal is related to an identification (ID) of the first cell.
24. The method according to any one of Supplements 20 to 23, wherein the fourth signal is one or more of the following signals: a Physical Downlink Control Channel (PDCCH), a Physical Downlink Shared Channel (PDSCH), a Synchronization Signal Block (SSB), a Channel State Information Reference Signal (CSIRS), a De-Modulation Reference Signal (DMRS), a Phase Tracking Reference Signal (PTRS), a Remote Interference Management Reference Signal (RIMRS), a Positioning Reference Signal (PRS).
25. The method according to any one of Supplements 20 to 23, wherein the fourth signal is one or more of the following signals:
   a Physical Downlink Control Channel (PDCCH) transmitted by the network device to the repeater, a scrambling sequence of the PDCCH being related to the cell ID;
   a Physical Downlink Shared Channel (PDSCH) transmitted by the network device to the repeater, a scrambling sequence of the PDSCH being related to the cell ID;
   a De-Modulation Reference Signal (DMRS) transmitted by the network device to the repeater, a sequence of the DMRS being related to the cell ID, the DMRS being used to demodulate a PDSCH and/or a PDCCH and/or a Physical Broadcast Channel (PBCH);
   a Synchronization Signal Block (SSB) transmitted by the network device, sequence generation of a Primary Synchronization Signal (PSS) and a Secondary Synchronization Signal (SSS) in the SSB being related to the cell ID, and/or a PBCH scrambling sequence in the SSB being related to the cell ID.
26. The method according to any one of Supplements 20 to 25, wherein the fourth signal is used to carry a MAC signaling or an RRC signaling transmitted by the network device to the repeater.
27. The method according to any one of Supplements 20 to 26, wherein the method further includes:
   further transmitting, by the network device, third indication information to the repeater, the third indication information being used to indicate and/or configure a third frequency resource, the third frequency resource being used by the repeater to receive the third signal.
28. The method according to Supplement 27, wherein
   the third indication information further indicates and/or configures a second frequency resource and/or a fourth frequency resource, the second frequency resource being used by the repeater to forward the second signal to the network device, and the fourth frequency resource being used by the repeater to forward the fourth signal.
29. The method according to Supplement 28, wherein a bandwidth of the fourth frequency resource is greater than or equal to a bandwidth of the second frequency resource, and/or, a center frequency point of the fourth frequency resource and a center frequency point of the second frequency resource are identical.
30. The method according to any one of Supplements 1 to 29, wherein the method further includes:
   indicating, by the network device, the repeater to transmit the first signal to the network device at the first time unit by using a first spatial filter, and to transmit the second signal to the network device at the second time unit by using a second spatial filter.
31. The method according to any one of Supplements 1 to 29, wherein the method further includes:
   indicating, by the network device, the repeater to transmit the first signal to the network device at the first time unit by using a first spatial filter, and to transmit the second signal to the network device at the second time unit.
32. The method according to any one of Supplements 20 to 29, wherein the method further includes:
   indicating, by the network device, the repeater to receive the third signal by using a third spatial filter, and to receive the fourth signal by using a fourth spatial filter.
33. The method according to any one of Supplements 20 to 29, wherein the method further includes:
   indicating, by the network device, the repeater to receive the third signal by using a third spatial filter, and to receive the fourth signal.
34. The method according to Supplement 16, wherein the method further includes:
   transmitting, by the network device, fourth indication information to the repeater, the fourth indication information indicating that the repeater processes at least a part of signals received at the second frequency resource.
35. The method according to Supplement 34, wherein the processing includes: demodulating and/or decoding the at least a part of signals received at the second frequency resource, and/or, performing channel estimation and/or channel measurement by using the at least a part of signals received at the second frequency resource.
36. The method according to Supplement 34, wherein the at least a part of signals received at the second frequency resource at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a PTRS.
37. The method according to Supplement 36, wherein the at least a part of signals received at the second frequency resource at least includes the SRS, the SRS being used by the repeater to:
   measure channel quality with a third device, and/or,
   determine a transmitting spatial filter of the third device, and/or,
   determine a transmitting spatial filter facing the third device, and/or,
   estimate a channel with the third device, and/or,
   estimate and/or correct a channel propagation delay with the third device, and/or,
   generate reporting information transmitted to the network device and related to a channel with the third device.
38. The method according to Supplement 36, wherein the at least a part of signals received at the second frequency resource at least includes the DMRS and the PUSCH, the DMRS being used by the repeater to demodulate and/or decode the PUSCH.
39. The method according to Supplement 36, wherein the at least a part of signals received at the second frequency resource at least includes the DMRS and the PUCCH, the DMRS being used by the repeater to demodulate and/or decode the PUCCH.
40. The method according to Supplement 36, wherein the at least a part of signals received at the second frequency resource includes the PTRS, the PTRS being used by the repeater to estimate phase noise.
41. The method according to Supplement 36, wherein the at least a part of signals received at the second frequency resource at least includes the RACH or leading signal, the RACH or leading signal being used by the repeater to:
   assist a third device to perform initial access; and/or,
   estimate a channel with the third device, and/or,
   estimate and/or correct a channel propagation delay with the third device, and/or,
   acquire information from the third device.
42. The method according to Supplement 35, wherein the network device indicates to the repeater a parameter used for the processing.
43. The method according to Supplement 20, wherein the group of time units further includes an eighth time unit, the eighth time unit being used by the repeater to receive an eighth signal according to an indication of the network device.
44. The method according to Supplement 43, wherein the network device indicates the repeater to demodulate and/or decode the eighth signal.
45. The method according to Supplement 43, wherein the eighth signal at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a Phase Tracking Reference signal (PTRS).
46. The method according to Supplement 20, wherein the group of time units further includes a seventh time unit, the seventh time unit being used by the repeater to transmit a seventh signal according to an indication of the network device.
47. The method according to Supplement 46, wherein the network device indicates to the repeater a parameter used to generate the seventh signal.
48. The method according to Supplement 46, wherein the seventh signal is an SSB, the SSB being used by the terminal equipment to perform at least one of the following processing: initial access, channel estimation, channel quality measurement, measurement of a transmitting spatial filter, or measurement of a receiving spatial filter.
49. The method according to Supplement 46, wherein the seventh signal is a reference signal, the reference signal being used by the terminal equipment to perform at least one of the following processing: channel estimation, channel quality measurement, measurement of a transmitting spatial filter, or measurement of a receiving spatial filter.
50. The method according to Supplement 46, wherein the seventh signal is a Sounding Reference Signal (SRS), or a Channel State Information Reference Signal (CSIRS), or a Tracking Reference Signal (TRS), or a Positioning Reference Signal (PRS), or a Random Access Channel (RACH).
51. The method according to Supplement 46, wherein the seventh signal is a DMRS and/or a data channel, the DMRS being used to assist in reception of the data channel, and the data channel being used to carry information and/or data transmitted by the repeater to the terminal equipment.
52. A communication method of a repeater, including:
   receiving, by a repeater, first indication information transmitted by a network device;
   wherein the first indication information is used to indicate a group of time units, a first time unit in the group of time units being available for the repeater to transmit a first signal generated by the repeater to the network device, and a second time unit in the group of time units being available for the repeater to transmit a second signal not generated by the repeater to the network device.
53. The method according to Supplement 52, wherein the method further includes:
   transmitting, by the repeater, the first signal to the network device at the first time unit, and/or transmitting the second signal to the network device at the second time unit.
54. The method according to Supplement 52, wherein the method further includes:
   receiving a period of the group of time units indicated and/or configured by the network device, and/or receiving a subcarrier interval to which the group of time units correspond indicated and/or configured by the network device.
55. The method according to any one of Supplements 52 to 54, wherein a time unit in the group of time units is at least one of a symbol, a slot, or a subframe.
56. The method according to any one of Supplements 52 to 55, wherein the repeater receives the first indication information in a first cell.
57. The method according to Supplement 53, wherein the repeater transmits the first signal and/or the second signal to the network device in the first cell.
58. The method according to Supplement 56 or 57, wherein the first cell is a serving cell of the repeater.
59. The method according to Supplement 56 or 57, wherein
   the first cell is a cell where the repeater performs initial access; and/or,
   the first cell is a cell where the repeater establishes an RRC connection with a network device; and/or,
   the first cell is a cell where the repeater reestablishes an RRC connection with a network device; and/or,
   the first cell is a cell where the repeater camps; and/or,
   the first cell is a cell selected by the repeater in a cell selection process or in a cell reselection process.
60. The method according to Supplement 58, wherein the first cell is a primary cell of the repeater.
61. The method according to any one of Supplements 56 to 60, wherein the method further includes:
   further receiving, by the repeater, second indication information from the network device, the second indication information being used to indicate and/or configure a first frequency resource, the first frequency resource being used by the repeater to transmit the first signal.
62. The method according to Supplement 61, wherein the first frequency resource is a carrier to which a first cell corresponds, or an uplink bandwidth part (BWP) configured and/or indicated by the network device for the repeater, or an active uplink BWP configured by the network device for the repeater.
63. The method according to any one of Supplements 52 to 62, wherein the first signal includes at least one of the following: a physical uplink shared channel (PUSCH), a demodulation reference signal (DMRS), a sounding reference signal (SRS), a physical random access channel (PRACH), a physical uplink control channel (PUCCH), or a scheduling request (SR).
64. The method according to any one of Supplements 52 to 63, wherein the first signal is generated by the repeater at least using a cell ID of a first cell, or generation of the first signal is related to the cell ID of the first cell.
65. The method according to Supplement 64, wherein the first signal includes a DMRS, sequence generation of the DMRS is related to the cell ID.
66. The method according to Supplement 64, wherein the first signal includes a PUSCH, a scrambling sequence of the PUSCH is related to the cell ID.
67. The method according to any one of Supplements 52 to 66, wherein the second signal is obtained by the repeater at least by amplifying a signal received by the repeater at a second frequency resource, the second frequency resource being configured and/or indicated by the network device for the repeater.
68. The method according to Supplement 67, wherein the signal received by the repeater at the second frequency resource at least contains a signal from a third device.
69. The method according to Supplement 68, wherein the first cell is a serving cell of the third device.
70. The method according to Supplement 68, wherein the first cell is not a serving cell of the third device.
71. The method according to any one of Supplements 52 to 70, wherein the method further includes:
   receiving, by the repeater, a third signal and/or a fourth signal transmitted by the network device, the third signal being transmitted after being at least amplified by the repeater, and the fourth signal being used to carry information and/or data transmitted by the network device to the repeater, or the fourth signal being used to configure the repeater to perform channel estimation and/or measurement.
72. The method according to Supplement 71, wherein the group of time units further includes a third time unit, the third signal and the fourth signal being transmitted by the network device at the third time unit.
73. The method according to Supplement 71, wherein the group of time units further includes a third time unit and a fourth time unit, the third signal being transmitted by the network device at the third time unit, and the fourth signal being transmitted by the network device at the fourth time unit.
74. The method according to any one of Supplements 71 to 73, wherein the fourth signal is a signal that the network device indicates the repeater to receive in a first cell, and/or the fourth signal is related to an identification (ID) of the first cell.
75. The method according to any one of Supplements 71 to 74, wherein the fourth signal is one or more of the following signals: a Physical Downlink Control Channel (PDCCH), a Physical Downlink Shared Channel (PDSCH), a Synchronization Signal Block (SSB), a Channel State Information Reference Signal (CSIRS), a De-Modulation Reference Signal (DMRS), a Phase Tracking Reference Signal (PTRS), a Remote Interference Management Reference Signal (RIMRS), a Positioning Reference Signal (PRS).
76. The method according to any one of Supplements 71 to 74, wherein the fourth signal is one or more of the following signals:
   a Physical Downlink Control Channel (PDCCH) transmitted by the network device to the repeater, a scrambling sequence of the PDCCH being related to the cell ID;
   a Physical Downlink Shared Channel (PDSCH) transmitted by the network device to the repeater, a scrambling sequence of the PDSCH being related to the cell ID;
   a De-Modulation Reference Signal (DMRS) transmitted by the network device to the repeater, a sequence of the DMRS being related to the cell ID, the DMRS being used to demodulate a PDSCH and/or a PDCCH and/or a Physical Broadcast Channel (PBCH);
   a Synchronization Signal Block (SSB) transmitted by the network device, sequence generation of a Primary Synchronization Signal (PSS) and a Secondary Synchronization Signal (SSS) in the SSB being related to the cell ID, and/or a PBCH scrambling sequence in the SSB being related to the cell ID.
77. The method according to any one of Supplements 71 to 76, wherein the fourth signal is used to carry a MAC signaling or an RRC signaling transmitted by the network device to the repeater.
78. The method according to any one of Supplements 71 to 77, wherein the method further includes:
   receiving, by the repeater, third indication information from the network device, the third indication information indicating and/or configuring a third frequency resource, the third frequency resource being used by the repeater to receive the third signal.
79. The method according to Supplement 78, wherein the third indication information is further used to indicate and/or configure a second frequency resource and/or a fourth frequency resource, the second frequency resource being used by the repeater to forward the second signal to the network device, and the fourth frequency resource being used by the repeater to forward the fourth signal.
80. The method according to Supplement 79, wherein a bandwidth of the fourth frequency resource is greater than or equal to a bandwidth of the second frequency resource, and/or, a center frequency point of the fourth frequency resource and a center frequency point of the second frequency resource are identical.
81. The method according to any one of Supplements 52 to 80, wherein the method further includes:
   transmitting, by the repeater, the first signal to the network device at the first time unit by using a first spatial filter, and transmitting the second signal to the network device at the second time unit by using a second spatial filter.
82. The method according to any one of Supplements 52 to 80, wherein the method further includes:
   transmitting, by the repeater, the first signal to the network device at the first time unit and transmitting the second signal to the network device at the second time by using a first spatial filter.
83. The method according to any one of Supplements 71 to 80, wherein the method further includes:
   receiving, by the repeater, the third signal by using a third spatial filter, and receiving the fourth signal by using a fourth spatial filter.
84. The method according to any one of Supplements 71 to 80, wherein the method further includes:
   receiving, by the repeater, the third signal by using a third spatial filter, and receiving the fourth signal.
85. The method according to Supplement 67, wherein the method further includes:
   receiving, by the repeater, fourth indication information from the network device, the fourth indication information indicating that the repeater processes at least a part of signals received at the second frequency resource.
86. The method according to Supplement 85, wherein the processing includes: demodulating and/or decoding the at least a part of signals received at the second frequency resource, and/or, performing channel estimation and/or channel measurement by using the at least a part of signals received at the second frequency resource.
87. The method according to Supplement 85, wherein the at least a part of signals received at the second frequency resource at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a Phase Tracking Reference signal (PTRS).
88. The method according to Supplement 87, wherein the at least a part of signals received at the second frequency resource at least includes the SRS, the SRS being used by the repeater to:
   measure channel quality with a third device, and/or,
   determine a transmitting spatial filter of the third device, and/or,
   determine a transmitting spatial filter facing the third device, and/or,
   estimate a channel with the third device, and/or,
   estimate and/or correct a channel propagation delay with the third device, and/or,
   generate reporting information transmitted to the network device and related to a channel with the third device.
89. The method according to Supplement 87, wherein the at least a part of signals received at the second frequency resource at least includes the DMRS and the PUSCH, the DMRS being used by the repeater to demodulate and/or decode the PUSCH.
90. The method according to Supplement 87, wherein the at least a part of signals received at the second frequency resource at least includes the DMRS and the PUCCH, the DMRS being used by the repeater to demodulate and/or decode the PUCCH.
91. The method according to Supplement 87, wherein the at least a part of signals received at the second frequency resource at least includes the PTRS, the PTRS being used by the repeater to estimate phase noise.
92. The method according to Supplement 87, wherein the at least a part of signals received at the second frequency resource at least includes the RACH or leading signal, the RACH or leading signal being used by the repeater to:
   assist a third device to perform initial access; and/or,
   estimate a channel with the third device, and/or,
   estimate and/or correct a channel propagation delay with the third device, and/or,
   acquire information from the third device.
93. The method according to Supplement 86, wherein the network device indicates to the repeater a parameter used for the processing.
94. The method according to Supplement 67, wherein the group of time units further includes an eighth time unit, the eighth time unit being used by the repeater to receive an eighth signal according to an indication of the network device.
95. The method according to Supplement 94, wherein the repeater demodulates and/or decodes the eighth signal.
96. The method according to Supplement 94, wherein the eighth signal at least includes one of the following signals: a Sounding Reference Signal (SRS), a Demodulation Reference Signal (DMRS), a Physical Uplink Shared Channel (PUSCH), a Physical Uplink Control Channel (PUCCH), a Random Access Channel (RACH) or a leading signal, or a Phase Tracking Reference signal (PTRS).
97. The method according to Supplement 67, wherein the group of time units further includes a seventh time unit, the seventh time unit being used by the repeater to transmit a seventh signal according to an indication of the network device.
98. The method according to Supplement 97, wherein the repeater receives a parameter for generating the seventh signal, as indicated by the network device.
99. The method according to Supplement 97, wherein the seventh signal is an SSB, the SSB being used by the terminal equipment to perform at least one of the following processing: initial access, channel estimation, channel quality measurement, measurement of a transmitting spatial filter, or measurement of a receiving spatial filter.
100. The method according to Supplement 97, wherein the seventh signal is a reference signal, the reference signal being used by the terminal equipment to perform at least one of the following processing: channel estimation, channel quality measurement, measurement of a transmitting spatial filter, or measurement of a receiving spatial filter.
101. The method according to Supplement 97, wherein the seventh signal is a Sounding Reference Signal (SRS), or a Channel State Information Reference Signal (CSIRS), or a Tracking Reference Signal (TRS), or a Positioning Reference Signal (PRS), or a Random Access Channel (RACH).
102. The method according to Supplement 97, wherein the seventh signal is a DMRS and/or a data channel, the DMRS being used to assist in reception of the data channel, and the data channel being used to carry information and/or data transmitted by the repeater to the terminal equipment.
103. A repeater, including a memory and a processor, the memory storing a computer program, and the processor being configured to execute the communication method according to any one of Supplements 52 to 102.
104. A network device, including a memory and a processor, the memory storing a computer program, and the processor being configured to execute the communication method according to any one of Supplements 1 to 51.

## Claims

1. A repeater, comprising:
a receiving portion configured to receive first indication information transmitted by a network device;
wherein the first indication information is used to indicate a group of time units, a first time unit in the group of time units being available for transmitting a first signal generated by the repeater to the network device, and a second time unit in the group of time units being available for transmitting a second signal not generated by the repeater to the network device.

2. The repeater according to claim 1, wherein the repeater further comprises:
a transmitting portion configured to transmit the first signal to the network device at the first time unit, and/or transmit the second signal to the network device at the second time unit.

3. The repeater according to claim 1, wherein the receiving portion is further configured to: receive a period of the group of time units indicated and/or configured by the network device, and/or receive a subcarrier interval to which the group of time units correspond indicated and/or configured by the network device.

4. The repeater according to claim 2, wherein the receiving portion receives the first indication information in a first cell, and/or the transmitting portion transmits the first signal and/or the second signal to the network device in the first cell.

5. The repeater according to claim 4, wherein the first cell is a serving cell of the repeater; and/or,
the first cell is a cell where the repeater performs initial access; and/or,
the first cell is a cell where the repeater establishes radio resource control connection with the network device; and/or,
the first cell is a cell where the repeater reestablishes radio resource control connection with the network device; and/or,
the first cell is a cell where the repeater camps; and/or,
the first cell is a cell selected by the repeater in a cell selection process or in a cell reselection process.

6. The repeater according to claim 1, wherein the receiving portion is further configured to: receive second indication information from the network device, the second indication information being used to indicate and/or configure a first frequency resource, the first frequency resource being used by the repeater to transmit the first signal.

7. The repeater according to claim 6, wherein the first frequency resource is a carrier to which a first cell corresponds, or an uplink bandwidth part configured and/or indicated by the network device for the repeater, or an active uplink bandwidth part configured by the network device for the repeater.

8. The repeater according to claim 1, wherein the first signal includes at least one of the following: a physical uplink shared channel, a demodulation reference signal, a sounding reference signal, a physical random access channel, a physical uplink control channel, a scheduling request.

9. The repeater according to claim 1, wherein the second signal is obtained by the repeater at least by amplifying a signal received by the repeater at a second frequency resource, the second frequency resource being configured and/or indicated by the network device for the repeater.

10. The repeater according to claim 1, wherein the receiving portion is further configured to: receive a third signal and/or a fourth signal transmitted by the network device, the third signal being transmitted after being at least amplified by the repeater, and the fourth signal being used to carry information and/or data transmitted by the network device to the repeater, or the fourth signal being used to configure the repeater to perform channel estimation and/or measurement.

11. The repeater according to claim 10, wherein the group of time units further comprises a third time unit, the third signal and the fourth signal being transmitted by the network device at the third time unit;
or,
the group of time units further comprises a third time unit and a fourth time unit, the third signal being transmitted by the network device at the third time unit, and the fourth signal being transmitted by the network device at the fourth time unit.

12. The repeater according to claim 10, wherein the fourth signal is one or more of the following signals: a physical downlink control channel, a physical downlink shared channel, a synchronization signal block, a channel state information reference signal, a demodulation reference signal, a phase tracking reference signal, a remote interference management reference signal, a positioning reference signal.

13. The repeater according to claim 10, wherein the receiving portion is further configured to: receive third indication information from the network device, the third indication information indicating and/or configuring a third frequency resource, the third frequency resource being used by the repeater to receive the third signal.

14. The repeater according to claim 13, wherein the third indication information is further used to indicate and/or configure a second frequency resource and/or a fourth frequency resource, the second frequency resource being used by the repeater to forward the second signal to the network device, and the fourth frequency resource being used by the repeater to forward the fourth signal.

15. The repeater according to claim 14, wherein a bandwidth of the fourth frequency resource is greater than or equal to a bandwidth of the second frequency resource, and/or, a center frequency of the fourth frequency resource and a center frequency the second frequency resource are identical.

16. The repeater according to claim 2, wherein the transmitting portion is further configured to: transmit the first signal to the network device at the first time unit by using a first spatial filter, and transmit the second signal to the network device at the second time unit by using a second spatial filter;
or,
transmit the first signal to the network device at the first time unit and transmit the second signal to the network device at the second time by using a first spatial filter.

17. The repeater according to claim 9, wherein the receiving portion is further configured to: receive fourth indication information from the network device, the fourth indication information indicating that the repeater processes at least a part of signals received at the second frequency resource;
wherein the processing comprises: demodulating and/or decoding the at least a part of signal received at the second frequency resource, and/or, performing channel estimation and/or channel measurement by using the at least a part of signals received at the second frequency resource.

18. The repeater according to claim 1, wherein the group of time units further comprises an eighth time unit, the eighth time unit being used by the repeater to receive an eighth signal according to an indication of the network device;
and/or,
the group of time units further comprises a seventh time unit, the seventh time unit being used by the repeater to transmit a seventh signal according to an indication of the network device.

19. A network device, comprising:
a transmitting portion configured to transmit first indication information to a repeater;
wherein the first indication information is used to indicate a group of time units, a first time unit in the group of time units being available for transmitting a first signal generated by the repeater to the network device, and a second time unit in the group of time units being available for transmitting a second signal not generated by the repeater to the network device.20. A communication system, comprising:
a network device configured to transmit first indication information, the first indication information being used to indicate a group of time units; and
a repeater configured to receive the first indication information; wherein a first time unit in the group of time units is available for transmitting a first signal generated by the repeater to the network device, and a second time unit in the group of time units is available for transmitting a second signal not generated by the repeater to the network device.
